# EUROPEAN PATENT SPECIFICATION

(11) **EP 3 885 067 B1**
(45) Date of publication and mention of the grant of the patent: **25.12.2024**
(21) Application number: 21163672.5
(22) Date of filing: 19.03.2021
(51) Int. Cl.: B23B 29/04

(54) **CUTTING TOOL AND CUTTING UNIT COMPRISING THE SAID CUTTING TOOL**
SCHNEIDWERKZEUG UND SCHNEIDEEINHEIT MIT DIESEM SCHNEIDWERKZEUG
OUTIL DE COUPE ET UNITÉ DE COUPE COMPRENANT LEDIT OUTIL DE COUPE

(30) Priority: 27.03.2020 IT 202000006520
(43) Date of publication of application: 29.09.2021
(73) Proprietor: Comand Tool S.r.l., 26010 Credera Rubbiano (CR) (IT)
(72) Inventor: Comanduli, Mauro, I-26010 Credera Rubbiano (CR) (IT); Comanduli, Angelo, I-26010 Credera Rubbiano (CR) (IT); Comanduli, Zefferino, I-26010 Credera Rubbiano (CR) (IT); Comanduli, Walter Sergio, I-26010 Credera Rubbiano (CR) (IT)
(74) Representative: Cammareri, Emanuele

(56) References cited:
- DE-A1- 2 548 072
- DE-U1- 202009 009 848
- US-A- 3 775 817
- US-B1- 7 284 938

## Description

### TECHNICAL FIELD

The present invention refers to the field of subtractive manufacturing. More specifically, the present invention refers to a tool for removal machining and a related tool-holder cutting unit for machine tools.

### STATE OF THE ART

In the machine tool industry, particularly for cutting machine tools - for example, turning, blanking, milling and threading machine tools - it is widely known to use interchangeable tools that can be coupled to the same machine tool so as to provide flexibility of use and adaptability to different machining requirements of the machine tool.

In general, each such tool - also referred to as cartridges in the jargon - comprises a support body, a cutting element - also referred to as an insert in the jargon -, fastening elements - for example, screws and brackets - and any ancillary elements - for example, gaskets, underplates, etc..

A tool holder is provided for attaching the tool to the machine tool, which is attached to the machine tool and the tool, in order to ensure the correct positioning of the required tool and enable the desired machining of a workpiece.

The coupling between the tool and the tool holder is a critical aspect, as on the one hand it must be stable and reliable to ensure precise machining of workpieces, and on the other hand the assembly and disassembly of tools from the tool holder must be simple and quick to ensure effective replacement of tools or components thereof.

For this purpose, the Applicant presented a tool and tool holder pair provided with matching surfaces having complementary abutting elements. Such abutting elements allow the tool to be simply and accurately coupled to the tool holder and, in addition, allow a single screw to be used to obtain a stable and reliable attachment of the tool to the tool holder.

Despite the goodness of this solution, the Applicant has observed that the mechanical stresses to which the tool-holder unit is subjected can lead to accelerated wear of the tool components and the establishment of unwanted

Document DE 20 2009 009848 describes a cutting tool according to the preamble of claim 1.

### OBJECT AND SUMMARY OF THE INVENTION

It is an object of the present invention to overcome the drawbacks of the prior art.

In particular, it is an object of the present invention to provide a cutting tool that allows stable and reliable coupling to a corresponding tool holder. In particular, the tool is capable of withstanding mechanical stress for extended periods, remaining stable while machining a workpiece, and still allows for quick and easy replacement of the tool as needed.

It is a further object of the present invention to provide a cutting unit comprising one or more interchangeable tools and a universal tool holder, which can be easily and reliably coupled and uncoupled.

These and other objects of the present invention are achieved by means of a unit incorporating the features of the appended claims, which form an integral part of the present description.

According to a first aspect, the present invention is directed to a cutting tool, for example a turning, blanking, milling, and/or threading tool. The tool includes a cutting element configured to contact a body to be machined, and a support body configured to support the cutting element in a working position and to be coupled to a tool holder mounted on a processing machine.

In detail, the support body includes a first side surface configured to be coupled to a first surface of the tool holder, the first side surface comprising at least one abutting surface configured to be coupled to a complementary abutting surface of the first surface of the tool holder, and at least one fastening element configured to be coupled to a complementary fastening element included in the first surface of the tool holder to secure the tool to the tool holder.

Advantageously, the support body includes a second lateral surface configured to abut at least partially against a second surface of the tool holder. The second lateral surface is adjacent to the first lateral surface, and includes at least one portion inclined relative thereto.

The second side surface includes an abutting portion configured to abut against the second surface of the tool holder. The second lateral surface delimits an elastic element of the support body. In detail, the elastic element is configured to generate a resilient elastic force substantially orthogonal to the abutting portion when the abutting portion is abutting against the second surface of the tool holder.

With such a solution, it is possible to stabilize the tool against mechanical stresses due to workpiece machining operations. In other words, the second lateral surface allows the forces associated with machining vibrations to be unloaded onto the tool holder, thereby conferring greater stability to the tool and substantially reducing the stresses on the one or more fastening elements used to couple the tool to the tool holder. As a result, both an increase in tool life and improved machining accuracy of workpieces by the machine tool are achieved.

This structure also ensures optimal coupling between the second lateral surface of the tool body and the tool holder. In particular, the elasticity of the elastic element allows to compensate for machining tolerances that would limit the uniformity of the coupling of the second lateral surface of the tool body with a corresponding surface of the tool holder. In addition, the elastic element may be sized to exert a further cushioning function with respect to mechanical stresses to which the tool is subjected during operation of the machine tool.

Preferably, the abutting portion is consecutive to the inclined portion.

In one embodiment, the first lateral surface comprises two or more positioning elements configured to correspond to respective two or more complementary positioning elements formed on the first surface of the tool holder. Preferably, at least three of the coupling elements are arranged to delimit a triangular region of the first lateral surface. Even more preferably, at least part of the surface of the positioning elements defines the abutting surface of the lateral surface.

This ensures precise positioning of the tool with respect to the tool holder and thus to the machine tool and, at same time, a particularly stable coupling between the tool and the tool holder. This results in a particularly precise workpiece processing.

In one embodiment, the inclined portion of the second lateral surface and the first lateral surface define an angle α of less than 180°, preferably less than 90°, with respect to a plane orthogonal to both the first lateral surface and the second lateral surface.

Due to such a structure, it is always possible to ensure contact between the second lateral surface of the tool and the second lateral surface of the tool holder.

In one embodiment, the abutting portion may comprise a dampening element, for example, a deformable element - such as an O-ring - configured to abut against the tool holder.

In this way, adhesion between the tool and the tool holder can be improved.

In one embodiment, the second lateral surface is delimited by a free edge of the support body.

In addition, the elastic element of the support body is further delimited by a slot, referred to as slot, which develops:
- in proximity to said free edge, inwardly of the support body, in an orientation parallel to or inclined with respect to the inclined portion of the second lateral surface, and
- transversely with respect to a plane orthogonal to both the first lateral surface and the second lateral surface.

This conformation of the tool body allows the elastic element to be defined and, at same time, allows the tool to be highly robust. In addition, when the elastic element is subjected to a deformation force greater than a limiting value, the walls delimiting the slot come into contact with each other, with the effect of making the elastic element substantially integral with the rest of the tool support body thus ensuring the robustness and stability of the tool.

In one embodiment, the second lateral surface is conformed such that a free end thereof - being distal from the first lateral surface - is at a distance from the first lateral surface of between 0.2 and 0.4 times, preferably between 0.25 and 0.3 times, a length of the first lateral surface, both calculated in the plane orthogonal to both abutting surfaces.

This ratio allows to obtain a particularly robust and reliable structure.

In one embodiment, the slot has a length along a direction parallel to or inclined with respect to the inclined portion of the second lateral surface of between 0.5 and 1.5, preferably 0.9 times the length of the second lateral surface calculated in the plane orthogonal to both the first lateral surface and the second lateral surface. Further, the slot preferably has a distance from the second lateral surface such that a thickness of the elastic element - calculated with respect to the orthogonal plane - is substantially constant or within an acceptable range of values throughout the extension of the slot within the body. Preferably, said range is between 0.2 and 0.4 times the length of the slot, even more preferably between 0.25 and 0.35 times the length of the slot, calculated in the plane orthogonal to both abutting surfaces.

In an alternative embodiment, said elastic element is a protruding appendage of the support body, said protruding appendage, projecting from the support body in a direction orthogonal or inclined to the first support surface, preferably, such that a free end of the appendage - being distal from the first lateral surface of the body - is at a distance from the first lateral surface of between 0.2 and 0.4 times, preferably between 0.25 and 0.3 times, a length of the first lateral surface where both the distance and the length are calculated in a plane orthogonal to both abutting surfaces.

Even more preferably, the appendage has a width of between 0.2 and 0.4 times, preferably between 0.25 and 0.35 times the distance between the free end of the appendage and the first lateral surface of the body calculated in the plane orthogonal to both abutting surfaces.

These conformations of the elastic element allow the tool to be stabilized in a manner similar to that described above. In addition, this conformation allows a mass of the tool support body to be reduced.

In one embodiment, the inclined portion of the second lateral surface is proximal to the first lateral surface. Further, the abutting portion is substantially orthogonal to the first lateral surface.

Due to this solution, it is possible to control and ensure a sufficient tool abutting surface, which can effectively distribute and transmit the mechanical stresses to which the tool is subjected.

In one embodiment, the second lateral surface includes a connecting portion adjacent to the first lateral surface and the inclined portion of the second lateral surface, said connecting portion being concave. Preferably, the connecting portion defines a circumferential arc profile with respect to a plane orthogonal to the first lateral surface and the second lateral surface.

In this way, it is possible to ensure an adequate coupling of the matching surfaces of the tool to the corresponding surfaces of the tool holder, in particular, which is not hindered by an edge between said surfaces of the tool holder. In addition, such a structure ensures effective deformation of the elastic element of the tool.

A different aspect of the present invention relates to a cutting unit, configured to be coupled to a machine tool. Said cutting unit comprises:
- a cutting tool according to any one of the preceding embodiments, and
- a tool holder configured to couple to the machine tool and the tool,

In particular, the tool holder comprises:
- a first surface provided with
- a complementary abutting surface configured to match with the tool abutting surface, and
- at least one complementary fastening element configured to match with a respective fastening element included in the first tool lateral surface, and
- a second surface adjacent to the first surface, said second surface comprising at least one portion inclined relative to the first surface by an angle greater than the angle of inclination between the inclined portion of the second lateral surface and the first lateral surface of the tool.

This cutting unit allows to obtain the above-mentioned advantages with reference to the cutting tool according to the present invention. Further, a plurality of tools having a support body with the above-mentioned features can be provided, with a cutting element suitable for performing different machining or cutting operations all of which are suitable for being coupled to the same tool holder.

Further characteristics and objects of the present invention will be more apparent from the following description.

### BRIEF DESCRIPTION OF THE DRAWINGS

The invention will be described below with reference to a few examples, provided for explanatory and non-limiting purposes and illustrated in the accompanying drawings. These drawings illustrate different aspects and embodiments of the present invention and, where appropriate, similar reference numerals illustrating similar structures, components, materials and/or elements in different figures are indicated by similar reference numerals.

In the drawings,
Figure 1 is a front view of a cutting tool according to one embodiment of the present invention;
Figure 2 is a rear view of the cutting tool of Figure 1;
Figure 3 is a plan view from above of the cutting tool of Figure 1;
Figure 4 is an enlargement of a detail of the view of the cutting tool of Figure 3;
Figure 5 is an axonometric view of a cutting unit according to one embodiment of the present invention;
Figure 6 is an axonometric view of a tool and a tool holder of the cutting unit of Figure 5 separated from each other;
Figure 7 is a plan view from above of the tool and tool holder of Figure 5 cutting unit separated from each other;
Figure 8 is an enlargement of a detail of a view of the cutting tool and tool holder of Figure 7, wherein tool positioning elements are shown in section; and
Figure 9 is a plan view from above of the tool and tool holder of the cutting unit of Figure 5 coupled together.

### DETAILED DESCRIPTION OF THE INVENTION

While the invention is susceptible to various modifications and alternative constructions, certain preferred embodiments are shown in the drawings and will be described in detail below. It should be understood, however, that there is no intention to limit the invention to the specific embodiment described herein, but, in contrast, the invention is intended to cover all modifications, alternative constructions, and equivalents that fall within the scope of the invention as defined in the claims.

The use of "e.g.," "etc.," "or" means non-exclusive alternatives without limitation unless otherwise indicated. The use of "includes" means "includes, but not limited to" unless otherwise indicated.

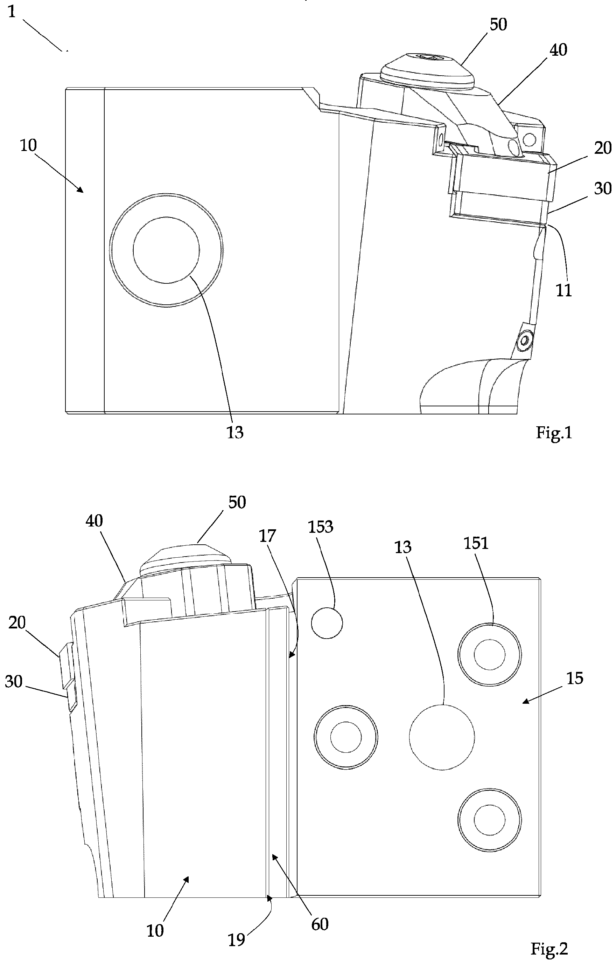

Referring to Figures 1-4, there is described a tool 1, also referred to as a 'cartridge', in accordance with one embodiment of the present invention.

In detail, the tool 1 includes a support body 10 on which a cutting element 20 is mounted also referred to by the term 'insert' in the jargon. In the example considered, the body 10 includes a housing 11 in which the cutting element 20 is inserted, preferably together with a spacer element 30, also referred to as a 'subplate' in the jargon. Preferably, the cutting element 20 and the spacer element 30 are locked in position by a screw (not visible in the Figures) and, even more preferably, by a bracket 40, which is in turn screwed to the body 10 by means of a screw 50.

Advantageously, the housing is formed at one end of the body 10 and is conformed such that at least one portion of the cutting element 20 projects outwardly.

Preferably, the body 10 and the bracket 40 include one or more nozzles (four of which are visible in Figure 1) configured to emit a lubrication/cleaning fluid - for example, a jet of water - to the cutting element 20 so as to remove machining swarf and maintain a reduced temperature of the cutting element 20 that would otherwise become frictionally hot during machining.

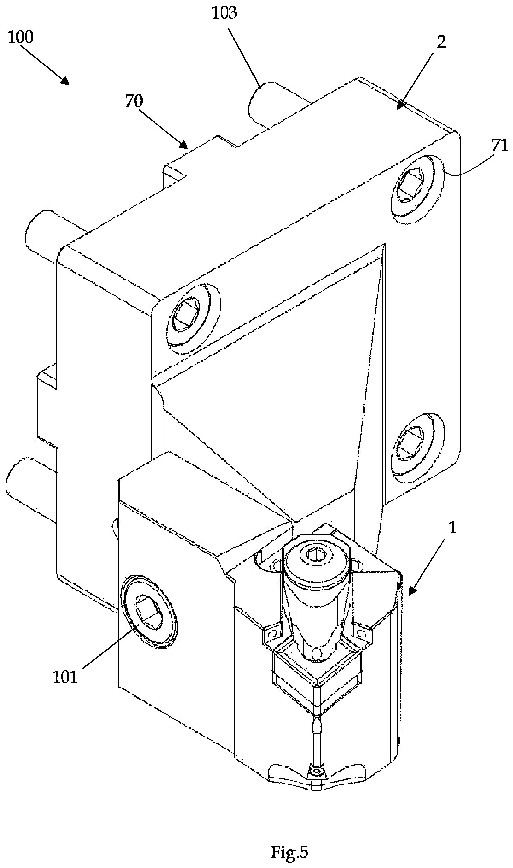

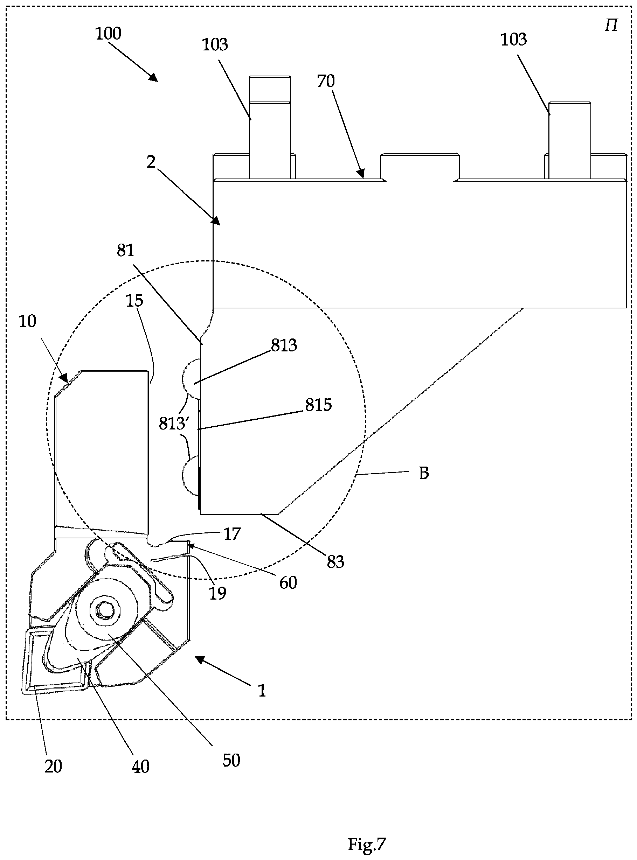

The body 10 further includes a through-hole 13 configured to receive a fastening screw 101 - visible in Figure 5 - for attachment to a tool holder - for example, the tool holder 2 illustrated in Figures 5-7 and described below.

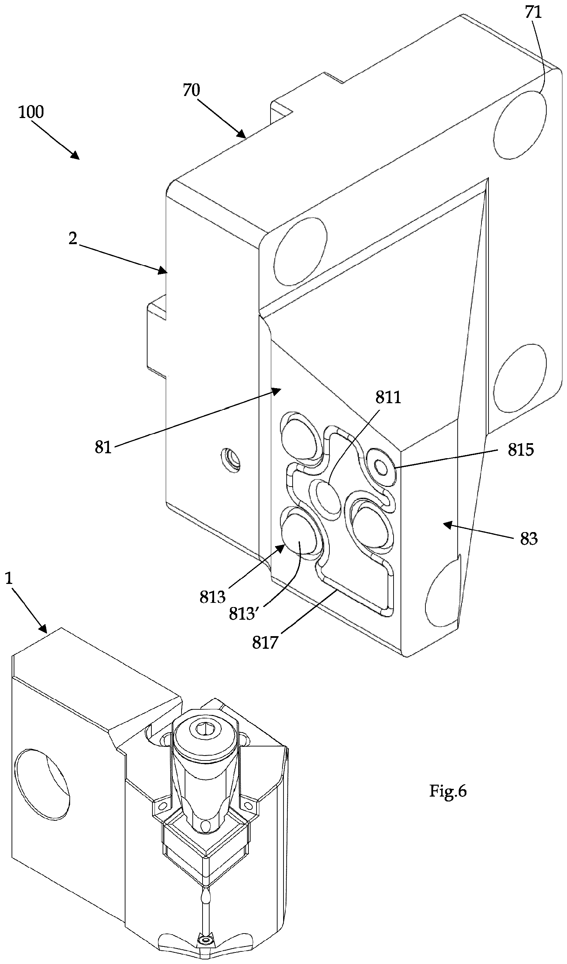

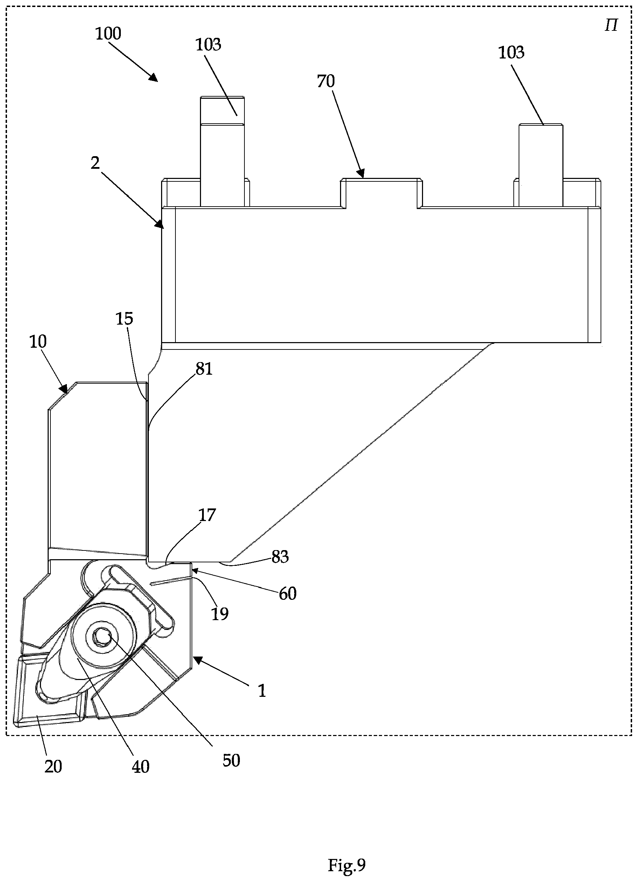

In detail, in order to allow coupling between tool 1 and tool holder 2, the tool 1 is provided with a first lateral surface 15, which is configured to be associated with a first lateral surface 81 of the tool holder 2 - as visible in Figures 6-9. The first lateral surface 15 is, preferably, exposed on the body in a direction substantially opposite to the direction towards which the cutting element 20 is exposed.

The body 10 comprises a plurality of positioning elements, three recesses 151 - substantially hemispherical in the example of the Figures -, each of which is suitable for receiving a complementary positioning element 813 of the tool holder 2 as appreciable in Figures 6-9. Preferably, the recesses 151 are arranged on the first lateral surface 15 so as to delimit a triangular region. In the example considered, the three recesses 151 are arranged at the vertices of said triangular region. Even more preferably, the recesses 151 are arranged at 120° to each other with respect to the through-hole 13.

In addition, although not necessarily, the body 10 comprised an inlet port 153 exposed on the first lateral surface 15, which is configured to hydraulically match tightly with a corresponding outlet port 815 of the tool holder 2 - as visible in Figure 6 - in order to receive the aforementioned lubrication/cleaning fluid.

In the embodiments of the present invention, the body 10 also comprises a second lateral surface 17, which is configured to abut at least partially against a corresponding second lateral surface 83 of the tool holder 2 - as appreciable in Figures 6-9.

In the example considered, the second lateral surface 17 is adjacent to the first lateral surface 15 and comprises, as it moves away from the first lateral surface 15, a connecting portion 171, an inclined portion 173, and an abutting portion 175.

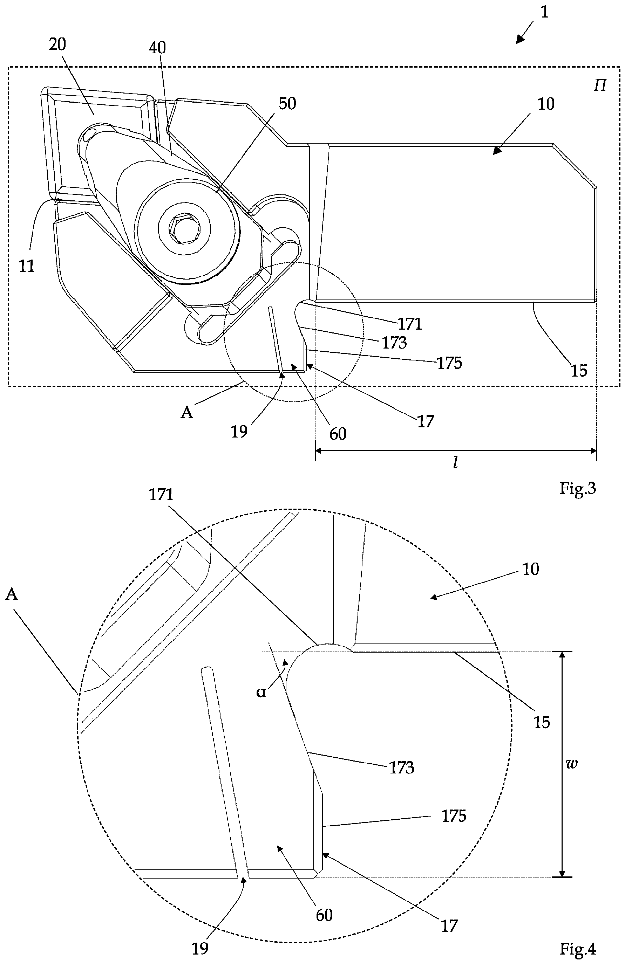

In detail, the connecting portion 171 follows one end of the first lateral surface 15 and the inclined portion 173 of the second lateral surface 17 and defines a circumferential arc profile with respect to a plane *Π* (illustrated in Figure 3) orthogonal to both the first lateral surface 15 and the second lateral surface 17.

The inclined portion 173 is configured to define an angle α with the first lateral surface 15 with respect to the plane *Π* - as illustrated in Figure 4 - that is less than an angle β defined between the first lateral surface 81 and the second lateral surface 83 of the tool holder 2. In the example considered, the inclined portion 173 of the second lateral surface 17 and the first lateral surface 15 define an angle α that is acute, i.e., less than 90° (α < 90°), preferably between 60° and 80°, such as 70°.

The abutting portion 175 is configured to abut against the second lateral surface 83 of the tool holder 2, and, preferably, follows the inclined portion 173. Even more preferably, the abutting portion 175 is substantially orthogonal to the first lateral surface 15 with respect to the plane *Π*.

Preferably, the second lateral surface 17 is conformed such that a free end thereof - distal from the first lateral surface 15 - included in the abutting portion 175 in the example considered is at a distance w from the first lateral surface 15 of between 0.2 and 0.4 times, preferably between 0.25 and 0.3 times a length *l* of the first lateral surface, both calculated in the plane Π.

The second lateral surface 17 delimits an elastic element 60 of the support body 10. Advantageously, the elastic member 60 is configured to generate an elastic resisting force which has an orientation substantially orthogonal - and, preferably, substantially parallel to the plane *Π* - to said abutting portion 175 of the second support surface when the abutting portion 175 is abutting against the second lateral surface 83 of the tool holder 2. In other words, the elastic element 60 is configured to elastically deform along a direction substantially parallel to the first lateral surface 15 when the tool body 10 of the tool 1 contacts and/or is constrained to the tool holder 2.

In the embodiment considered, the elastic element 60 is a portion of the body 10 delimited by the second lateral surface 17, a slot 19 extending into the body 10 and a free edge of the support body 10 between the first two.

Preferably, the slot 19 extends proximate to said free edge inwardly of the support body 10 and has an orientation parallel to or inclined with respect to the inclined portion 173 of the second lateral surface 17. Further, the slot 19 extends transversely, preferably orthogonally, with respect to the plane *Π*. Advantageously, the orientation of the slot 19 with respect to the inclined portion 173 is selected to ensure that a thickness of the elastic element 60 - calculated with respect to the plane *Π* - is substantially constant or within an acceptable range of values throughout the extent of the slot 19 within the body 10.

In the example considered, the slot 19 has a length along a direction parallel to or inclined with respect to the inclined portion of the second lateral surface between 0.5 and 1.5, preferably between 0.9 and 1 times the length of the second lateral surface calculated in the plane *Π*. Further, the slot 19 has a distance from the second lateral surface between 0.2 and 0.4 times the length of the slot 19, preferably between 0.25 and 0.35 times the length of the slot 19 calculated in the plane *Π*.

As mentioned above, the tool 1 couples to the tool holder 2 to form a cutting unit 100 according to one embodiment of the present invention. In detail, the tool holder 2 configured to couple to a machine tool (not shown) to the tool 1.

The tool holder 2 comprises a machine connecting portion 70 configured to couple to the machine tool and a tool connecting portion 80 configured to couple to the tool 1.

In the example considered, the machine connecting portion 70 comprises a plurality of through-holes 71 each adapted to receive a corresponding fastening screw 103 - as visible in Figure 6 - and, optionally a hydraulic inlet port (not visible in the figures) to receive lubrication/cleaning fluid from the machine tool.

Otherwise, the tool connecting portion 80 comprises a first lateral surface 81 and a second lateral surface 83 adjacent to each other.

The tool holder 2 comprises a threaded hole 811 exposed on the first lateral surface 81 and configured to receive the screw 101 passing through the through-hole 13 of the tool 1 such that the tool 1 can be attached to the tool holder 2 by screwing said screw.

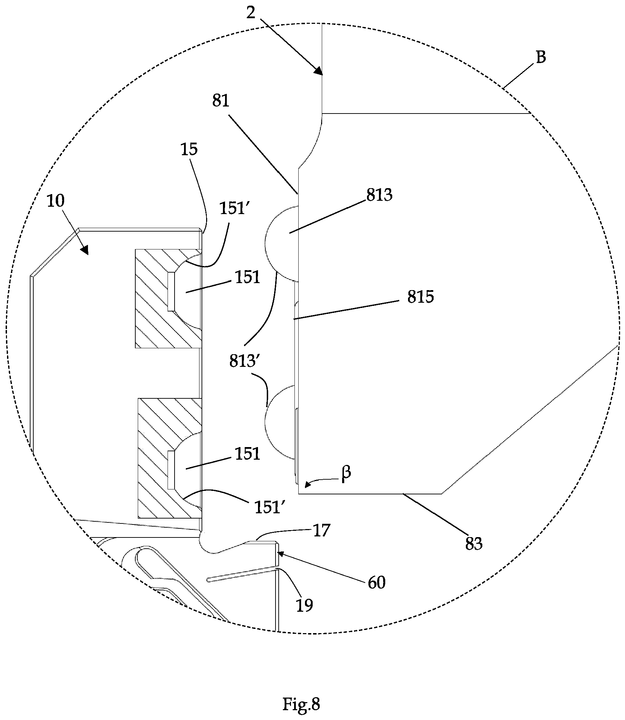

As mentioned above, the tool holder 2 comprises a plurality of complementary positioning elements, three hemispheres 813 in the example of the Figures, each of which is adapted to be received by a corresponding abutting element 151 of the tool 1 as appreciable in Figures 6 - 9. In other words, the hemispheres 813 are arranged to define a triangular region on the first lateral surface 81 of the tool holder 2 corresponding to the triangular region defined by the recesses 151 on the first abutting region 15 of the tool. In the example considered, the hemispheres 813 are arranged at 120° to each other with respect to the threaded hole 811 in a manner corresponding to the arrangement of the abutting elements 151 - as best appreciated in the detail of Figure 8.

In addition, although not necessarily, the tool holder 2 comprises an outlet port 815 exposed on the first lateral surface 81, which is configured to be sealingly coupled hydraulically with the corresponding tool inlet port 1 in order to transmit the aforementioned lubrication/cleaning fluid.

Advantageously, the tool holder 2 also comprises a sealing/ dampening element 817, for example an O-ring, projecting from the first lateral surface 81, preferably, so as to surround the threaded hole 811.

In the example considered, the second lateral surface 83 of the tool holder is substantially a flat surface orthogonal to the first lateral surface 81 and preferably, orthogonal to the plane *Π* to which the first lateral surface 81 is also orthogonal.

In use, the tool holder 2 is mounted to the machine tool and then the tool 1 is attached to the tool holder 2 with the screws 103 being secured to the machine tool, which screws are passing through the holes 71. In particular, the first lateral surface 15 of the tool 1 is juxtaposed to the first lateral surface 81 of the tool holder 2 so that the through-hole 13 and the threaded hole 81 are coaxial to each other and each of the recesses 151 receives a corresponding hemisphere 813 by mechanically coupling to the same.

In particular, the surfaces 151' of the recesses 151 shown in Figure 8 define an abutting surface of the first lateral surface 15 of the body 10, which surface, when the tool 1 is coupled to the tool holder 2, contacts a complementary abutting surface 813' of the first lateral surface 81 of the tool holder 2, which surface is defined by the surfaces 813' of the hemispheres 813.

Preferably, the first lateral surface 15 of the tool 1 remains spaced apart from the first lateral surface 81 of the tool holder 2 when the hemispheres 813 are coupled to the recesses 151 and the sealing/ dampening element 817 on the first lateral surface 81 of the tool holder 2 abuts against the first lateral surface 15 of the body 10.

At same time, the second lateral surface 17 of the tool 1 couples to the second lateral surface 83 of the tool holder 2, in particular, the abutting portion 175 of the second lateral surface 17 of the tool 1 abuts against the second lateral surface 83 of the tool holder 2.

The screw 101 is then threaded through the through-hole 13 of the tool 1 and through the threaded hole 81, thereby securing the tool 1 to the tool holder 2. In other words, the through-hole 13, the threaded hole 81, and the screw 101 are fastening elements that form a fastening unit for securing the tool 1 to the tool holder 2.

Eventually, the elastic element 60 deforms - at the limit to the point of contact of the body walls 10 delimiting the slot 19 - thereby compensating for manufacturing tolerances of the tool 1 and/or the tool holder 2.

The embodiments of the invention described above are susceptible to numerous modifications and variations all within the scope of the present invention.

For example, in embodiments (not illustrated) of the present invention, the connecting portion of the second side surface of the tool is omitted. In this case, the inclined portion of the second lateral surface is adjacent to the first side surface of the tool.

Additionally, or alternatively, in alternative embodiments (not shown) of the present invention, the abutting portion has a minimum size, in particular, the abutting portion may correspond to a substantially linear portion - for example, an edge of the body. In this case, the direction of the elastic force is to be considered orthogonal to the abutting portion when orthogonal or inclined to the second lateral surface of the tool holder.

In any case, the abutting portion may be provided with a sealing/dampening element (not shown) - such as an O-ring - so as to ensure greater stability of the coupling between the secondary surfaces of the tool and the tool holder.

Again, nothing prevents providing an embodiment (not illustrated) in which the first lateral surface of the tool body and the first lateral surface of the tool holder are configured to contact each other once the tool is secured to the tool holder.

In other embodiments (not illustrated), the connecting portion has a concave shape other than a circumferential arc - for example, a sequence of broken lines - preferably, suitable for receiving an edge defined by the first lateral surface and the second lateral surface of the tool holder.

In a different embodiment (not illustrated), the elastic element is a protruding appendage of the support body. In this case, the appendage protrudes from the body in a direction orthogonal or inclined to the first support surface, preferably, such that a free end of the appendage - distal from the first lateral surface of the body - is at a distance from the first lateral surface of between 0.2 and 0.4 times, preferably between 0.25 and 0.3 times, a length of the first lateral surface, where both the distance and the length are calculated in a plane orthogonal to both abutting surfaces.

Even more preferably, the appendage has a width of between 0.2 and 0.4 times, preferably between 0.25 and 0.35 times a distance between the free end of the appendage and the first lateral surface of the body calculated in a plane orthogonal to both abutting surfaces.

In an alternative embodiment (not illustrated), the tool and the tool holder are devoid of any abutting elements - such as the recesses and hemispheres considered above - in which case the tool abutting surface corresponds substantially to the first lateral surface of the tool body and, similarly, the complementary abutting surface corresponds to the first major surface of the tool holder.

It is to be understood that all details can be replaced by other technically equivalent elements.

For example, the screws may be replaced by other fastening elements of the known type, wherein there may be provided complementary fastening units formed and/or coupable to the first lateral surface of the tool and the first lateral surface of the tool holder, for example fastening units comprising one or more snap-on or bayonet fastening elements.

In conclusion, the materials employed and, *a fortiori,* the contingent shapes and dimensions of the tool and tool holder according to various embodiments of the present invention may be any according to specific implementation requirements, in particular, according to the type of machining to be performed on the workpieces (turning, blanking, milling, threading, etc.), the characteristics of the workpieces to be machined (in particular, the material used), the characteristics of the product to be manufactured (in particular, the dimensions of the desired tolerances), the characteristics of the machine tool on which the cutting unit is mounted and/ or the characteristics of the environment in which the machine tool is installed without, however, going beyond the scope of protection of the following claims.

## Claims

1. Cutting tool (1) comprising:
- a cutting element (20) configured to come into contact with a body to be machined, and
- a support body (10) configured to support the cutting element (20) in a working position and to be coupled to a tool holder (2) mounted on a processing machine, wherein the support body (10) comprises a first lateral surface (15) configured to be brought alongside to a first surface (81) of the tool holder (2), the first lateral surface (15) comprising:
- a matching surface (151') configured to match a complementary matching surface (813) of the first surface (81) of the tool holder (2), and
- at least one fastening element (13) configured to match a corresponding fastening element (811) comprised in the first surface (81) of the tool holder (2) for fastening the tool to the tool holder (2),
wherein the support body (10) comprises a second lateral surface (17) configured to abut at least partially against a second surface (83) of the tool holder (2), said second lateral surface (17) being adjacent to the first lateral surface (15), and comprising at least an inclined portion (173) with respect thereto and an abutment portion (175) configured to abut against the second surface (83) of the tool holder (2),
**characterized in that** the second lateral surface (17) delimits an elastic element (60) of the support body (10), said elastic element (60) being configured to generate a resistant elastic force substantially orthogonal to said abutment portion (175), when the abutment portion (175) is in contact with the second surface (83) of the tool holder (2).

2. Tool (1) according to claim 1, wherein the abutment portion (175) of the second lateral surface (17) is consecutive to the inclined portion (173).

3. Tool according to claim 1 or 2, wherein the inclined portion (173) of the second lateral surface (17) and the first lateral surface (15) define an angle lower than 180°, preferably lower than 90°, with respect to a plane orthogonal to both the first lateral surface (15) and the second lateral surface (17).

4. Tool (1) according to any one of claims 1 to 3, wherein the second lateral surface (17) is delimited by a free edge of the support body (10), and
wherein said elastic element (60) of the support body (10) is further delimited by a slit (19), said slit (19) extending:
- in proximity of said free edge towards the inside of the support body (10), with a parallel or inclined orientation with respect to the inclined portion (173) of the second lateral surface (10), and
- transversely with respect to a plane orthogonal to both the first lateral surface (15) and the second lateral surface (17).

5. Tool (1) according to claim 4, wherein the slit (19) has a length along a parallel or inclined direction with respect to the inclined portion (173) of the second lateral surface (17) comprised between 0.5 and 1.5, preferably equal to 0.9, times the length of the second lateral surface (17), calculated on the plane orthogonal to both the first lateral surface (15) and the second lateral surface (17).

6. Tool (1) according to claim 4 or 5, wherein the second lateral surface (17) is shaped so that one of its free ends is at a distance from the first lateral surface comprised between 0.2 and 0.4 times, preferably between 0.25 and 0.3 times, a length of the first lateral surface, wherein said distance and said length are calculated in the plane orthogonal to both the first lateral surface (15) and the second lateral surface (17), and wherein the slit (19) has a distance from the second lateral surface (17) comprised between 0.2 and 0.4 times the length of the slit, even more preferably between 0.25 and 0.35 times the length of the slit, calculated on the plane orthogonal to both the first lateral surface (15) and the second lateral surface (17).

7. Tool (1) according to any one of claims 1 to 3, wherein said elastic element (60) is a protruding appendage of the support body (10), said protruding appendage protruding from the support body (10) in an orthogonal or inclined direction with respect to the first support surface (15) so that a free end of the protruding appendage is at a distance from the first lateral surface (15) comprised between 0.2 and 0.4 times, preferably between 0.25 and 0, 3 times, a length of the first lateral surface (15), said distance and said length being calculated in the plane orthogonal to both the first lateral surface (15) and the second lateral surface (17), and
wherein the protruding appendage has a width comprised between 0.2 and 0.4 times, preferably between 0.25 and 0.35 times said distance between the free end of the appendage and the first lateral surface.

8. Tool (1) according to any one of the preceding claims, wherein the abutment portion (175) is substantially orthogonal to the first lateral surface (15) with respect to a plane orthogonal to both the first lateral surface (15) and the second lateral surface (17).

9. Tool (1) according to any one of the preceding claims, wherein the second lateral surface (17) comprises a connecting portion (171) adjacent to the first lateral surface (15) and to the inclined portion (173) of the second lateral surface (17), said connecting portion (171) being concave.

10. Tool (1) according to claim 9, wherein the connecting portion (171) defines a circular arc with respect to a plane orthogonal to the first lateral surface (15) and to the second lateral surface (17).

11. Tool (1) according to any one of the preceding claims, wherein the first lateral surface (15) comprises two or more positioning elements (151) configured to correspond to respective two or more complementary positioning elements (813) formed on the first surface (81) of the tool holder (2), wherein at least a portion of the surface of the positioning elements (151) defines said matching surface (151') of the first lateral surface (15).

12. Tool (1) according to any one of the preceding claims, wherein the abutment portion (175) comprises a dampening element, such as a deformable element, configured to abut against the tool holder (2).

13. Cutting unit (100), configured to be coupled to a machine tool, comprising:
- a cutting tool (1) according to any one of the preceding claims, and
- a tool holder (2) configured to mate to the machine tool and the tool (1), wherein said tool holder (2) comprises:
- a first surface (81) equipped with:
- a complementary matching surface (813') configured to match with the matching surface (151') of the tool (1), and
- at least one element of attachment (811) supplementary configured to correspond to a respective element of attachment (13) including the first lateral surface (15) of the tool (1), and
- a second surface (83) adjacent to the first surface (81), said second surface (83) comprising at least one portion inclined with respect to the first surface (81) of an angle larger than an inclination angle between the inclined portion (173) of the second lateral surface (17) and the first lateral surface (15) of the tool (1).

14. Cutting unit (100) according to claim 13, wherein the first lateral surface (15) comprises two or more positioning elements (813) configured to correspond to respective two or more complementary positioning elements (151) formed on the first surface (15) of the tool holder (1).

15. Cutting unit (100) according to claim 13 or 14, wherein the tool holder (2) comprises a sealing or dampening element (817) projecting from the first lateral surface (81).

## Patentansprüche

1. Schneidwerkzeug (1), umfassend:
ein Schneidelement (20), das so konfiguriert ist, dass es mit einem zu bearbeitenden Körper in Kontakt kommt, und
einen Stützkörper (10), der so konfiguriert ist, dass er das Schneidelement (20) in einer Arbeitsposition stützt und mit einem Werkzeughalter (2) gekoppelt werden kann, der an einer Bearbeitungsmaschine angebracht ist, wobei der Stützkörper (10) eine erste Seitenfläche (15) umfasst, die so konfiguriert ist, dass sie an eine erste Fläche (81) des Werkzeughalters (2) angenähert werden kann, wobei die erste Seitenfläche (15) Folgendes umfasst:
eine passende Fläche (151'), die so konfiguriert ist, dass sie mit einer komplementären passenden Fläche (813) der ersten Fläche (81) des Werkzeughalters (2) zusammenpasst, und
mindestens ein Befestigungselement (13), das so konfiguriert ist, dass es mit einem entsprechenden Befestigungselement (811) zusammenpasst, das in der ersten Fläche (81) des Werkzeughalters (2) enthalten ist, um das Werkzeug an dem Werkzeughalter (2) zu befestigen,
wobei der Stützkörper (10) eine zweite Seitenfläche (17) umfasst, die so konfiguriert ist, dass sie wenigstens teilweise an einer zweiten Fläche (83) des Werkzeughalters (2) anliegt, wobei die genannte zweite Seitenfläche (17) an die erste Seitenfläche (15) angrenzt und wenigstens einen geneigten Abschnitt (173) in Bezug darauf und einen Anschlagabschnitt (175) umfasst, der so konfiguriert ist, dass er an der zweiten Fläche (83) des Werkzeughalters (2) anliegt, **dadurch gekennzeichnet, dass** die zweite Seitenfläche (17) ein elastisches Element (60) des Stützkörpers (10) definiert, wobei das genannte elastische Element (60) so konfiguriert ist, dass es eine elastische Widerstandskraft im Wesentlichen orthogonal zu dem genannten Anschlagabschnitt (175) erzeugt, wenn der Anschlagabschnitt (175) in Kontakt mit der zweiten Fläche (83) des Werkzeughalters (2) ist.

2. Werkzeug (1) nach Anspruch 1, wobei der Anschlagabschnitt (175) der zweiten Seitenfläche (17) auf den geneigten Abschnitt (173) folgt.

3. Werkzeug nach Anspruch 1 oder 2, wobei der geneigte Abschnitt (173) der zweiten Seitenfläche (17) und der ersten Seitenfläche (15) einen Winkel von weniger als 180°, vorzugsweise weniger als 90°, zu einer Ebene bildet, die sowohl zur ersten Seitenfläche (15) als auch zur zweiten Seitenfläche (17) orthogonal ist.

4. Werkzeug (1) nach einem der Ansprüche 1 bis 3, wobei die zweite Seitenfläche (17) durch eine freie Kante des Stützkörpers (10) begrenzt ist und
wobei das genannte elastische Element (60) des Stützkörpers (10) ferner durch einen Schlitz (19) begrenzt ist, wobei sich der genannte Schlitz (19) in der Nähe der genannten freien Kante in Richtung der Innenseite des Stützkörpers (10) erstreckt, mit einer parallelen oder geneigten Ausrichtung in Bezug auf den geneigten Abschnitt (173) der zweiten Seitenfläche (10) und
quer in Bezug auf eine Ebene, die sowohl zu der ersten Seitenfläche (15) als auch zu der zweiten Seitenfläche (17) orthogonal ist.

5. Werkzeug (1) nach Anspruch 4, wobei der Schlitz (19) eine Länge entlang einer Richtung parallel oder geneigt zu dem geneigten Abschnitt (173) der zweiten Seitenfläche (17) aufweist, die zwischen 0,5 und 1,5, vorzugsweise gleich 0,9, mal der Länge der zweiten Seitenfläche (17) ist, berechnet in einer Ebene, die sowohl zu der ersten Seitenfläche (15) als auch zu der zweiten Seitenfläche (17) orthogonal ist.

6. Werkzeug (1) nach Anspruch 4 oder 5, wobei die zweite Seitenfläche (17) derart ausgebildet ist, dass eines ihrer freien Enden einen Abstand von der ersten Seitenfläche aufweist, der zwischen dem 0,2- und 0,4-fachen, vorzugsweise zwischen dem 0,25- und 0,3-fachen einer Länge der ersten Seitenfläche liegt, wobei der genannte Abstand und die genannte Länge in der Ebene berechnet werden, die sowohl zur ersten Seitenfläche (15) als auch zur zweiten Seitenfläche (17) orthogonal ist, und wobei der Schlitz (19) einen Abstand von der zweiten Seitenfläche (17) aufweist, der zwischen dem 0,2- und 0,4-fachen der Länge des Schlitzes, vorzugsweise zwischen dem 0,25- und 0,35-fachen der Länge des Schlitzes, berechnet in der Ebene, die sowohl zu der ersten Seitenfläche (15) als auch zu der zweiten Seitenfläche (17) orthogonal ist, liegt.

7. Werkzeug (1) nach einem der Ansprüche 1 bis 3, wobei das genannte elastische Element (60) ein vorstehender Fortsatz des Stützkörpers (10) ist, wobei der genannte vorstehende Fortsatz von dem Stützkörper (10) in einer orthogonalen oder geneigten Richtung in Bezug auf die erste Stützfläche (15) vorsteht, so dass ein freies Ende des vorstehenden Ansatzes sich in einem Abstand von der ersten Seitenfläche (15) befindet, der zwischen dem 0,2- und 0,4-fachen, vorzugsweise zwischen dem 0,25- und 0,3-fachen, einer Länge der ersten Seitenfläche (15) liegt, wobei der genannte Abstand und die genannte Länge in der Ebene berechnet werden, die sowohl zu der ersten Seitenfläche (15) als auch zu der zweiten Seitenfläche (17) orthogonal ist, und wobei der vorstehende Ansatz eine Breite aufweist, die zwischen dem 0,2- und 0,4-fachen, vorzugsweise zwischen dem 0,25- und 0,35-fachen des genannten Abstands zwischen dem freien Ende des Ansatzes und der ersten Seitenfläche liegt.

8. Werkzeug (1) nach einem der vorhergehenden Ansprüche, wobei der Anschlagabschnitt (175) im Wesentlichen orthogonal zu der ersten Seitenfläche (15) in Bezug auf eine Ebene ist, die sowohl zu der ersten Seitenfläche (15) als auch zu der zweiten Seitenfläche (17) orthogonal ist.

9. Werkzeug (1) nach einem der vorhergehenden Ansprüche, wobei die zweite Seitenfläche (17) einen Verbindungsabschnitt (171) angrenzend an die erste Seitenfläche (15) und den geneigten Abschnitt (173) der zweiten Seitenfläche (17) aufweist, wobei der genannte Verbindungsabschnitt (171) konkav ist.

10. Werkzeug (1) nach Anspruch 9, wobei der Verbindungsabschnitt (171) einen Kreisbogen bezüglich einer Ebene orthogonal zu der ersten Seitenfläche (15) und der zweiten Seitenfläche (17) definiert.

11. Werkzeug (1) nach einem der vorhergehenden Ansprüche, wobei die erste Seitenfläche (15) zwei oder mehr Positionierungselemente (151) umfasst, die so konfiguriert sind, dass sie mit zwei oder mehr entsprechenden komplementären Positionierungselementen (813) übereinstimmen, die an der ersten Fläche (81) des Werkzeughalters (2) ausgebildet sind, wobei mindestens ein Teil der Fläche der Positionierungselemente (151) die genannte passende Fläche (151') der ersten Seitenfläche (15) definiert.

12. Werkzeug (1) nach einem der vorhergehenden Ansprüche, wobei der Anschlagabschnitt (175) ein Dämpfungselement, wie beispielsweise ein verformbares Element, umfasst, das so konfiguriert ist, dass es an dem Werkzeughalter (2) anliegt.

13. Schneideinheit (100), die so konfiguriert ist, dass sie an eine Werkzeugmaschine angekoppelt werden kann, umfassend:
ein Schneidwerkzeug (1) nach einem der vorhergehenden Ansprüche; und
einen Werkzeughalter (2), der so konfiguriert ist, dass er mit der Werkzeugmaschine und dem Werkzeug (1) zusammenpasst, wobei der genannte Werkzeughalter (2) folgendes umfasst:
eine erste Fläche (81) umfassend:
eine komplementäre passende Fläche (813'), die so konfiguriert ist, dass sie mit der passenden Fläche (151') des Werkzeugs (1) zusammenpasst, und
mindestens ein Befestigungselement (811), das zusätzlich so konfiguriert ist, dass es mit einem jeweiligen Befestigungselement (13) zusammenpasst, das die erste Seitenfläche (15) des Werkzeugs (1) umfasst, und
eine zweite Fläche (83), die an die erste Fläche (81) angrenzt, wobei die genannte zweite Fläche (83) mindestens einen Abschnitt aufweist, der in Bezug auf die erste Fläche (81) um einen Winkel geneigt ist, der größer ist als der Neigungswinkel zwischen dem geneigten Abschnitt (173) der zweiten Seitenfläche (17) und der ersten Seitenfläche (15) des Werkzeugs (1).

14. Schneideinheit (100) nach Anspruch 13, wobei die erste Seitenfläche (15) zwei oder mehr Positionierungselemente (813) umfasst, die so konfiguriert sind, dass sie mit zwei oder mehr entsprechenden komplementären Positionierungselementen (151) übereinstimmen, die auf der ersten Fläche (15) des Werkzeughalters (1) ausgebildet sind.

15. Schneideinheit (100) nach Anspruch 13 oder 14, wobei der Werkzeughalter (2) ein Dichtungs- oder Dämpfungselement (817) umfasst, das von der ersten Seitenfläche (81) vorsteht.

## Revendications

1. Outil de coupe (1) comprenant :
- un élément de coupe (20) configuré pour entrer en contact avec un corps à usiner, et
- un corps de support (10) configuré pour supporter l'élément de coupe (20) dans une position de travail et pour être couplé à un porte-outil (2) monté sur une machine d'usinage, **caractérisé en ce que** le corps de support (10) comprend une première surface latérale (15) configurée pour être amenée à côté d'une première surface (81) du porte-outil (2), la première surface latérale (15) comprenant :
- une surface d'adaptation (151) configurée pour s'adapter à une surface d'adaptation complémentaire (813) de la première surface (81) du porte-outil (2), et
- au moins un élément de fixation (13) configuré pour s'adapter à un élément de fixation correspondant (811) compris dans la première surface (81) du porte-outil (2) pour fixer l'outil au porte-outil (2),
**caractérisé en ce que** le corps de support (10) comprend une deuxième surface latérale (17) configurée pour s'appuyer au moins partiellement contre une deuxième surface (83) du porte-outil (2), ladite deuxième surface latérale (17) étant adjacente à la première surface latérale (15) et comprenant au moins une partie inclinée (173) par rapport à celle-ci et une partie de butée (175) configurée pour s'appuyer contre la deuxième surface (83) du porte-outil (2),
**caractérisée en ce que** la deuxième surface latérale (17) délimite un élément élastique (60) du corps de support (10), ledit élément élastique (60) étant configuré pour générer une force élastique résistante sensiblement orthogonale à ladite partie de butée (175), lorsque la partie de butée (175) est en contact avec la deuxième surface (83) du porte-outil (2).

2. Outil (1) selon la revendication 1, **caractérisé en ce que** la partie de butée (175) de la deuxième surface latérale (17) est consécutive à la partie inclinée (173).

3. Outil selon la revendication 1 ou 2, **caractérisé en ce que** la partie inclinée (173) de la deuxième surface latérale (17) et la première surface latérale (15) définissent un angle inférieur à 180°, de préférence inférieur à 90°, par rapport à un plan orthogonal à la première surface latérale (15) ainsi qu'à la deuxième surface latérale (17).

4. Outil (1) selon l'une quelconque des revendications 1 à 3, **caractérisé en ce que** la deuxième surface latérale (17) est délimitée par un bord libre du corps de support (10), et
**caractérisé en ce que** ledit élément élastique (60) du corps de support (10) est en outre délimité par une fente (19), ladite fente (19) s'étendant :
- à proximité dudit bord libre vers l'intérieur du corps de support (10), avec une orientation parallèle ou inclinée par rapport à la partie inclinée (173) de la deuxième surface latérale (10), et
- transversalement par rapport à un plan orthogonal à la première surface latérale (15) ainsi qu'à la deuxième surface latérale (17).

5. Outil (1) selon la revendication 4, **caractérisé en ce que** la fente (19) a une longueur le long d'une direction parallèle ou inclinée par rapport à la partie inclinée (173) de la deuxième surface latérale (17) comprise entre 0,5 et 1,5, de préférence égale à 0,9, fois la longueur de la deuxième surface latérale (17), calculée sur le plan orthogonal à la première surface latérale (15) ainsi qu'à la deuxième surface latérale (17).

6. Outil (1) selon la revendication 4 ou 5, **caractérisé en ce que** la deuxième surface latérale (17) est façonnée de sorte que l'une de ses extrémités libres se trouve à une distance de la première surface latérale comprise entre 0,2 et 0,4 fois, de préférence entre 0,25 et 0,3 fois, la longueur de la première surface latérale, ladite distance et ladite longueur étant calculées dans le plan orthogonal à la première surface latérale (15) et à la deuxième surface latérale (17), et ladite fente (19) étant à une distance de la deuxième surface latérale (17) comprise entre 0,2 et 0,4 fois la longueur de la fente, idéalement entre 0,25 et 0,35 fois la longueur de la fente, calculée dans le plan orthogonal à la première surface latérale (15) ainsi qu'à la deuxième surface latérale (17).

7. Outil (1) selon l'une quelconque des revendications 1 à 3, **caractérisé en ce que** ledit élément élastique (60) est un appendice en saillie du corps de support (10), ledit appendice en saillie faisant saillie depuis le corps de support (10) dans une direction orthogonale ou inclinée par rapport à la première surface de support (15) de sorte qu'une extrémité libre de l'appendice en saillie se trouve à une distance de la première surface latérale (15) comprise entre 0,2 et 0,4 fois, de préférence entre 0,25 et 0,3 fois, la longueur de la première surface latérale (15), ladite distance et ladite longueur étant calculées dans le plan orthogonal à la première surface latérale (15) ainsi qu'à la deuxième surface latérale (17), et ledit appendice en saillie ayant une largeur comprise entre 0,2 et 0,4 fois, de préférence entre 0,25 et 0,35 fois, la distance entre l'extrémité libre de l'appendice et la première surface latérale.

8. Outil (1) selon l'une quelconque des revendications précédentes, **caractérisé en ce que** la partie de butée (175) est sensiblement orthogonale à la première surface latérale (15) par rapport à un plan orthogonal à la première surface latérale (15) ainsi qu'à la deuxième surface latérale (17).

9. Outil (1) selon l'une quelconque des revendications précédentes, **caractérisé en ce que** la deuxième surface latérale (17) comprend une partie de connexion (171) adjacente à la première surface latérale (15) et à la partie inclinée (173) de la deuxième surface latérale (17), ladite partie de connexion (171) étant concave.

10. Outil (1) selon la revendication 9, **caractérisé en ce que** la partie de connexion (171) définit un arc de cercle par rapport à un plan orthogonal à la première surface latérale (15) et à la deuxième surface latérale (17).

11. Outil (1) selon l'une quelconque des revendications précédentes, **caractérisé en ce que** la première surface latérale (15) comprend deux ou plusieurs éléments de positionnement (151) configurés pour correspondre à deux ou plusieurs éléments de positionnement complémentaires (813) respectifs formés sur la première surface (81) du porte-outil (2), **caractérisés en ce qu'**au moins une partie de la surface des éléments de positionnement (151) définit ladite surface d'adaptation (151) de la première surface latérale (15).

12. Outil (1) selon l'une quelconque des revendications précédentes, **caractérisé en ce que** la partie de butée (175) comprend un élément amortisseur, tel qu'un élément déformable, configuré pour venir en butée contre le porte-outil (2).

13. Unité de coupe (100), configurée pour être couplée à une machine-outil, comprenant :
- un outil de coupe (1) selon l'une quelconque des revendications précédentes, et
- un porte-outil (2) configuré pour être couplé à la machine-outil et à l'outil (1), **caractérisé en ce que** ledit porte-outil (2) comprend :
- une première surface (81) dotée d' :
- une surface d'adaptation complémentaire (813) configurée pour s'adapter à la surface d'adaptation (151) de l'outil (1), et
- au moins un élément de fixation (811) complémentaire configuré pour correspondre à un élément de fixation (13) respectif comprenant la première surface latérale (15) de l'outil (1), et
- une deuxième surface (83) adjacente à la première surface (81), ladite deuxième surface (83) comprenant au moins une partie inclinée par rapport à la première surface (81) d'un angle supérieur à un angle d'inclinaison entre la partie inclinée (173) de la deuxième surface latérale (17) et la première surface latérale (15) de l'outil (1).

14. Unité de coupe (100) selon la revendication 13, **caractérisée en ce que** la première surface latérale (15) comprend deux ou plusieurs éléments de positionnement (813) configurés pour correspondre à deux ou plusieurs éléments de positionnement complémentaires (151) respectifs formés sur la première surface (15) du porte-outil (1).

15. Unité de coupe (100) selon la revendication 13 ou 14, **caractérisée en ce que** le porte-outil (2) comprend un élément d'étanchéité ou d'amortissement (817) faisant saillie depuis la première surface latérale.
